# EUROPÄISCHE PATENTSCHRIFT

(11) **EP 3 963 505 B1**
(45) Veröffentlichungstag und Bekanntmachung des Hinweises auf die Patenterteilung: **13.03.2024**
(21) Anmeldenummer: 20725102.6
(22) Anmeldetag: 30.04.2020
(51) Int. Cl.: G06V 10/145, G06V 10/147, G06V 20/59

(54) **OBJEKTERKENNUNGSSYSTEM MIT FLÄCHIGEM TRÄGERMEDIUM ZUM ANORDNEN AUF EINEM GERÄT**
OBJECT IDENTIFICATION SYSTEM WITH FLAT CARRIER MEDIUM FOR ARRANGING ON A DEVICE
SYSTÈME DE RECONNAISSANCE D'OBJET COMPRENANT UN ENSEMBLE SUPPORT PLAN CONÇU POUR ÊTRE DISPOSÉ SUR UN APPAREIL

(30) Priorität: 03.05.2019 DE 102019206377
(43) Veröffentlichungstag der Anmeldung: 09.03.2022
(73) Patentinhaber: Audi AG, 85045 Ingolstadt (DE)
(72) Erfinder: KLUG, Markus, 85057 Ingolstadt (DE); MOLL, Tobias, 85055 Ingolstadt (DE); SCHEUCHENPFLUG, Johannes, 85107 Baar-Ebenhausen (DE)
(74) Vertreter: Hofstetter, Schurack & Partner
(86) Internationale Anmeldenummer: PCT/EP2020/062107
(87) Internationale Veröffentlichungsnummer: WO 2020/225119

(56) Entgegenhaltungen:
- US-A1- 2016 110 621
- US-A1- 2017 307 797
- US-A1- 2019 041 634
- US-A1- 2019 049 736
- BLEDA SERGIO ET AL: "Study of the imaging characteristics of holographic waveguides", SPIE - INTERNATIONAL SOCIETY FOR OPTICAL ENGINEERING. PROCEEDINGS, S P I E - INTERNATIONAL SOCIETY FOR OPTICAL ENGINEERING, US, Bd. 11030, 23. April 2019 (2019-04-23), Seiten 1103013-1103013, XP060123462, ISSN: 0277-786X, DOI: 10.1117/12.2522167 ISBN: 978-1-5106-3549-4

## Beschreibung

Die Erfindung betrifft ein Kraftfahrzeug mit einem Fahrzeuginnenraum und einem Objekterkennungssystem. Das Objekterkennungssystem umfasst eine Auswerteeinrichtung und zumindest eine Erfassungseinrichtung, wobei die zumindest eine Erfassungseinrichtung zumindest eine Bilderfassungseinrichtung sowie ein flächiges Trägermedium zum Anordnen auf einem Gerät umfasst.

Zum Feststellen, welche Art von Objekt sich in einer Umgebung eines Geräts befindet, können verschiedene Messmethoden angewendet werden. Es kann eine Messmethode angewendet werden, die beispielsweise auf einer Nahfeldkommunikation basiert oder mithilfe eines optischen Sensors, eines Radargeräts oder einem näherungsbasierten Sensor erfolgt. Als näherungsbasierter Sensor wird hierbei zum Beispiel eine Induktionsmesseinrichtung oder ein Drucksensor verstanden. Insbesondere bei optischen Sensoren ist jedoch häufig eine Aufnahmeposition zum Aufnehmen eines Abbilds des Objekts, das erkannt werden soll, unpassend vorgegeben. Dies ist beispielsweise dann der Fall, wenn aufgrund eines Bildwinkels eines Messgeräts ein Abbild des Objekts verzerrt ist, eine Erkennungsdistanz beziehungsweise eine Fokusebene des Messgeräts eingeschränkt ist, ein Grad einer Auflösung des Abbilds zu gering ist, ein Bauraum innerhalb beispielsweise eines Fahrzeugs, in dem das Objekt erfasst und erkannt werden soll, zu klein für die Anwendung der gewählten Messmethode oder das Gerät intransparent ausgebildet ist, wodurch verschiedene Positionen innerhalb des Kraftfahrzeugs, wie beispielsweise an einer Windschutzscheibe, nicht gewählt werden können.

Die US 2015/0023602 A1 zeigt ein System und ein Verfahren zum schnellen Erkennen und Unterscheiden von verschiedenen Objekten. Hierbei kann das Objekt mithilfe eines Sensors eines Fahrzeugs erkannt werden, der nach einem holografischen Prinzip arbeitet.

In der DE 10 2009 010 904 A1 ist die Erkennung eines Objekts oder mehrerer Objekte durch Aufzeichnen eines zeitlich kohärenten Objektwellenfeldes, das von dem jeweiligen Objekt reflektiert oder emittiert wird, beschrieben. Hierbei wird eine Amplitude und Phase des Objektwellenfelds an mehreren Punkten eines Aufzeichnungsraumausschnitts aufgezeichnet.

Die WO 00/50267 zeigt eine Personen- oder Objekterkennung in einem Innenraum eines Fahrzeugs mittels eines Sensors. Der Sensor kann hierbei als Kamera ausgebildet sein und Bilder des Innenraums aufnehmen, die daraufhin einer Mustererkennung unterzogen werden. Alternativ dazu kann der Sensor beispielsweise mittels optischer Strahlung einen Wirkungsbereich im Innenraum des Fahrzeugs abtasten. US2019/041634 A1, 7. Februar 2019 beschreibt einen Objekt-Tracker, welcher eine Lichtquelle, mindestens einen Beleuchtungswellenleiter, der optisch mit der Quelle gekoppelt ist und weiterhin mindestens eine Gitterlamelle zum Beugen des Lichts in Richtung eines externen Objekts umfasst.

Aus dem Stand der Technik sind außerdem optische Beugungsgitter bekannt, die holographisch hergestellt werden und daher als holografische Gitter bezeichnet werden. Diesbezüglich ist aus der wissenschaftlichen Veröffentlichung "Volume-phase holographic gratings and their potential for astronomical applications" (S. C. Barden, J. A. Arns und W. S. Colburn, Proceedings SPIE 3355, Optical Astronomical Instrumentation, 1998) bekannt, dass Licht, das auf ein derartiges holografisches Gitter in einem Winkel trifft, der deutlich außerhalb des Winkelbereichs liegt, der die Bragg-Bedingung erfüllt, ungebeugt das holografische Gitter passiert. Trifft jedoch Licht aus einem Winkel auf das holografische Gitter, sodass die Bragg-Bedingung zumindest in etwa erfüllt ist, wird das Licht in einem Winkel gebeugt. Ein ähnliches Verhalten zeigt sich bezüglich einer Wellenlängenabhängigkeit des Einflusses des holografischen Gitters auf Licht. Denn Licht mit einer Wellenlänge, die deutlich außerhalb des Wellenlängenbereichs liegt, der durch die Bragg-Bedingung als sogenannte Bragg-Wellenlänge vorgegeben wird, passiert ebenfalls das holografische Gitter ohne gebeugt zu werden und lediglich Licht mit einer Wellenlänge, die die Bragg-Bedingung zumindest in etwa erfüllt, wird am holografischen Gitter gebeugt. Mittels komplexer holografischer Gitterstrukturen ist es somit beispielsweise möglich, dass Licht mit zwei verschiedenen Wellenlängenbereichen in jeweils demselben Winkel gebeugt wird. Außerdem kann durch ein holografisches Gitter beispielsweise Licht mit verschiedenen Wellenlängen in verschiedene Lichtwege aufgeteilt werden, sodass mithilfe eines holografischen Gitters ein dispersiver Strahlteiler realisiert werden kann.

Es ist die Aufgabe der Erfindung, eine Lösung bereitzustellen, mittels der über einen großflächigen Aufnahmebereich ein Objekt in einer Umgebung erfasst und erkannt werden kann.

Die Aufgabe wird durch den Gegenstand des unabhängigen Patentanspruchs gelöst. Vorteilhafte Weiterbildungen der Erfindung sind durch die abhängigen Patentansprüche, die folgende Beschreibung sowie die Figuren offenbart.

Das erfindungsgemäße Kraftfahrzeug weist einen Fahrzeuginnenraum und ein Objekterkennungssystem auf. Im Folgenden wird zunächst auf das Objekterkennungssystem eingegangen.

Das Objekterkennungssystem umfasst eine Auswerteeinrichtung, sowie zumindest eine Erfassungseinrichtung: Die zumindest eine Erfassungseinrichtung umfasst zumindest eine Bilderfassungseinrichtung sowie ein flächiges Trägermedium. Das flächige Trägermedium ist dazu ausgelegt, auf einem Gerät angeordnet zu sein. Das Trägermedium ist beispielsweise als Platte oder Folie (beispielsweise aus Kunststoff oder Glas) realisiert, wobei das Trägermedium Licht aus der Umgebung an die zumindest eine Bilderfassungseinrichtung mittels interner Reflexion weiterleitet. Das Trägermedium ist hierzu als Lichtleiter ausgebildet, an dem ein Einkoppelbereich und ein Auskoppelbereich bereitgestellt sind. Das Trägermedium stellt also ein Lichtleitmedium dar. Es ist Träger des Einkoppelbereichs und den Auskoppelbereichs.

Der Einkoppelbereich ist als holographisches Element mit einer ersten Ablenkstruktur ausgebildet. Die erste Ablenkstruktur ist dazu ausgebildet, Licht, das aus einer Umgebung auf die erste Ablenkstruktur fällt, in das flächige Trägermedium einzukoppeln. Als flächiges Trägermedium wird hier ein Trägermedium bezeichnet, dessen Länge und Breite einer Oberfläche im Vergleich zu einer senkrecht dazu stehenden Dicke des Trägermediums besonders groß gewählt ist. Der Einkoppelbereich umfasst zumindest einen Teilbereich der Oberfläche des flächigen Trägermediums. Die erste Ablenkstruktur des Einkoppelbereichs kann beispielsweise als Beugungsgitter realisiert sein.

Das flächige Trägermedium ist nun dazu ausgebildet, das eingekoppelte Licht mittels interner Reflexion, bevorzugt Totalreflexion, von dem Einkoppelbereich an den Auskoppelbereich zu übertragen. Der Auskoppelbereich ist wiederum als holographisches Element mit einer zweiten Ablenkstruktur ausgebildet, die dazu ausgelegt ist, das übertragene Licht, das auf die zweite Ablenkstruktur fällt, aus dem flächigen Trägermedium auszukoppeln. Die zweite Ablenkstruktur des Auskoppelbereichs kann beispielsweise ebenfalls als Beugungsgitter realisiert sein.

Am Auskoppelbereich ist die zumindest eine Bilderfassungseinrichtung angeordnet, die dazu ausgebildet ist, das ausgekoppelte Licht zu erfassen und in Form von Bilddaten, die mit dem erfassten Licht korrelieren, bereitzustellen. Die Bilderfassungseinrichtung ist also dazu ausgerichtet, Bilddaten aus dem in die Erfassungseinrichtung eingekoppelten Licht zu erzeugen oder zu generieren. Zum Erfassen des aus dem Trägermedium ausgekoppelten Lichts liegt die Bilderfassungseinrichtung an dem Auskoppelbereich an. Zur Befestigung der Bilderfassungseinrichtung an dem Trägermedium kann die Bilderfassungseinrichtung beispielsweise an das Trägermedium angeklebt werden. Alternativ kann das Trägermedium in einer Halteeinrichtung der Bilderfassungseinrichtung eingespannt werden. Bevorzugt kann die Bilderfassungseinrichtung als Bildsensor oder Kamera, jeweils mit oder ohne abbildender Optik, wie zum Beispiel einer Linse oder einem Linsensystem, realisiert sein. Die Bilderfassungseinrichtung kann beispielsweise als CCD-Sensor (Charged Coupled Device - ladungsgekoppelte Vorrichtung) oder als CMOS-Sensor (Complementary Metal Oxide Semiconductor - komplementärer Metalloxidhalbleiter) ausgebildet sein. Bei dieser Ausgestaltung der Bilderfassungseinrichtung als Bildsensor kann das Trägermedium, an dem der Einkoppelbereich und der Auskoppelbereich angeordnet sind, zusätzlich die Aufgabe eines Objektivs, also einer abbildenden Optik, ausführen. Alternativ kann die Bilderfassungseinrichtung auch als Kamera oder Fotoapparat, insbesondere als Mikrokamera, wie sie beispielsweise in einem mobilen Endgerät (Smartphone) ausgebildet ist, mit eigener abbildender Optik realisiert sein. Die Bilderfassungseinrichtung ist also zum fotographischen und/oder videobasierten Erzeugen eines Abbilds einer Umgebung des Objekterkennungssystems ausgelegt.

Das Objekterkennungssystem ist also dazu ausgebildet, statische oder bewegte Bilder, die ein Abbild der Umgebung des Objekterkennungssystems darstellen, aufzuzeichnen. Hierbei wird das Licht, das aus der Umgebung auf die erste Ablenkstruktur fällt, in das Trägermedium eingekoppelt und innerhalb des Trägermediums in zick-zack-artigen Bewegungen entlang einer Richtung parallel zu einer Ebene der Oberfläche des Trägermediums geleitet. Voraussetzung hierfür ist natürlich, dass die Erfassungseinrichtung des Objekterkennungssystems in einer bevorzugten Einbaulage positioniert ist, das heißt auf der Oberfläche eines Geräts angeordnet ist, wobei die Seite mit dem Einkoppelbereich in Richtung der Umgebung gerichtet ist, wohingegen der Auskoppelbereich beispielsweise auf der gegenüberliegenden Seite angeordnet ist und beispielsweise in Richtung des Geräts angeordnet ist. Der Einkoppelbereich und der Auskoppelbereich können alternativ dazu auf derselben Seite des Trägermediums bereitgestellt sein.

Der gesamte Einkoppelbereich der Erfassungseinrichtung dient also als Erfassungsbereich für das Licht, das letztendlich an die Bilderfassungseinrichtung weitergeleitet und dort als mit dem Licht korrelierte Bilddaten bereitgestellt wird. Der Einkoppelbereich bildet folglich eine Art Kamerasensor für die Bilderfassungseinrichtung. Der Einkoppelbereich umfasst dabei bevorzugt eine gesamte Oberflächenseite des flächig ausgebildeten Trägermediums. Hierdurch ergibt sich der Vorteil, dass der Erfassungsbereich des Objekterkennungssystems zumindest eine gesamte Seite des flächigen Trägermediums umfassen kann.

Die Auswerteeinrichtung des Objekterkennungssystems ist nun dazu ausgebildet, unter Berücksichtigung der Bilddaten ein Objekt in der Umgebung zu erfassen. Mithilfe der Auswerteeinrichtung kann somit erkannt werden, ob in den mit dem erfassten Licht korrelierten Bilddaten ein zusammenhängendes Objekt zu erkennen ist, wie beispielsweise eine Person, ein Gegenstand oder ein Symbol, das beispielsweise auf einer Anzeigevorrichtung in der Umgebung angezeigt wird. Darüber hinaus ist die Auswerteeinrichtung dazu ausgebildet, das erfasste Objekt unter Berücksichtigung eines Objekterkennungskriteriums zu erkennen. Das Objekterkennungskriterium umfasst beispielsweise in einer Datenbank hinterlegte Charakteristika verschiedener Objekte, wie beispielsweise eine typische Größe, Farbgebung und Formen, ein typisches Reflexionsverhalten von Licht an dem Objekt sowie eine typische ortsabhängige und/oder zeitabhängige Anordnung von Objekten beispielsweise innerhalb eines Kraftfahrzeugs. Das erkannte Objekt beschreibende Objektdaten werden letztendlich von der Auswerteeinrichtung bereitgestellt. Die Objekterkennung kann auf Basis einer Methode des maschinellen Lernens, zum Beispiel mittels eines künstlichen neuronalen Netzwerks, erfolgen.

Ist die Erfassungseinrichtung mit dem flächigen Trägermedium beispielsweise an einem Armaturenbrett eines Kraftfahrzeugs angeordnet, kann mit dem Objekterkennungssystem das Gesicht eines Fahrers des Kraftfahrzeugs zunächst in Form von Bilddaten erfasst werden, daraufhin das erfasste Objekt, das heißt das erfasste Gesicht des Fahrers, unter Berücksichtigung des Objekterkennungskriteriums erkannt und beispielsweise einem hinterlegten Profil des Fahrers zugeordnet werden, sodass der Fahrer identifiziert werden kann. Daraufhin können die Objektdaten beispielsweise einen Namen sowie weitere im Profil hinterlegte Daten zu dem erkannten Fahrer umfassen.

Die Auswerteeinrichtung weist hierfür beispielsweise eine Prozessoreinrichtung auf, die dazu eingerichtet ist, die beschriebene Objekterkennung durchzuführen. Die Prozessoreinrichtung kann hierzu zumindest einen Mikroprozessor oder zumindest einen Mikrocontroller aufweisen. Des Weiteren kann die Prozessoreinrichtung Programmcode aufweisen, der dazu eingerichtet ist, bei Ausführen durch die Prozessoreinrichtung die beschriebene Objekterkennung durchzuführen. Der Programmcode dafür kann in einem Datenspeicher der Prozessoreinrichtung gespeichert sein.

Mit dem Objekterkennungssystem wird also letztendlich eine Art Kameravorrichtung, die als Kamerasensor das flächige Trägermedium mit der am Auskoppelbereich angeordneten zumindest einen Bilderfassungseinrichtung umfasst und an einer beliebigen Position beispielsweise in einem Kraftfahrzeuginnenraum positionierbar ist, realisiert, mit der zum einen eine Bilderfassung sowie eine Objekterkennung eines Objekts in den erfassten Bilddaten ermöglicht wird. Hierdurch können beispielsweise Gegenstände in einem Innenraum des Kraftfahrzeugs erfasst und erkannt werden. Hierbei wird eine Verbesserung einer Aufnahmequalität der dafür benötigten Bilddaten im Vergleich zu den oben beschriebenen alternativen Möglichkeiten zur Gegenstandserkennung erreicht, indem das Licht auf einer großen Fläche zunächst in das Trägermedium eingekoppelt und von diesem an die Bilderfassungseinrichtung übermittelt wird. Denn hierbei wird Licht von einer großen Aufnahmefläche, beispielsweise der gesamten Oberfläche des flächigen Trägermediums, in das Objekterkennungssystem eingekoppelt, sodass nicht nur punktuell sondern großflächig eine Bilderfassung erfolgt. Ein derartiges flächiges und bevorzugt außerdem transparent ausgebildetes Trägermedium lässt sich außerdem unauffällig in verschiedenen Positionen, unter anderem in eine Windschutzscheibe eines Kraftfahrzeugs, integrieren. Das beschriebene Objekterkennungssystem ist somit vielseitig innerhalb einer Umgebung, wie beispielsweise einem Kraftfahrzeug einsetzbar.

Zu der Erfindung gehören auch Ausgestaltungsformen, durch die sich zusätzliche Vorteile ergeben.

Eine Ausgestaltungsform sieht vor, dass der Einkoppelbereich und der Auskoppelbereich als Ablenkstruktur zumindest ein optisches Gitter, insbesondere ein holografisches Oberflächengitter oder ein holografisches Volumengitter, aufweisen. In diesem Zusammenhang kann die Erfassungseinrichtung auch als HoloCam, kurz für holografische Kamera, bezeichnet werden.

Ein optisches Gitter, auch Beugungsgitter genannt, sowie dessen Wirkungsweise und Herstellungsverfahren ist, wie bereits erwähnt, allgemein bekannt, wie es beispielsweise aus der oben zitierten wissenschaftlichen Publikation hervorgeht. Grundsätzlich kann ein optisches Gitter auf zumindest abschnittsweise periodischen Strukturen, einer sogenannten Gitterstruktur, in einem Substrat beruhen. Mittels einer solchen Gitterstruktur kann ein optisches Gitter durch den physikalischen Effekt der Beugung eine Lichtlenkung, wie sie zum Beispiel von Spiegeln, Linsen oder Prismen bekannt ist, herbeiführen. Fällt Licht, das heißt fallen Lichtstrahlen auf das optische Gitter, wobei die einfallenden Lichtstrahlen insbesondere die Bragg-Gleichung erfüllen, werden die Lichtstrahlen durch das optische Gitter gebeugt oder abgelenkt. Die Lichtlenkung kann somit insbesondere durch Interferenzerscheinungen der durch das optische Gitter gebeugten Lichtstrahlen erfolgen. Die Ablenkstruktur des Einkoppelbereichs oder Auskoppelbereichs kann dementsprechend auch als Beugungsstruktur bezeichnet werden.

Vorzugsweise kann ein optisches Gitter gegenüber dem einfallenden Licht richtungsselektiv oder winkelselektiv ausgebildet sein. Somit kann nur Licht, insbesondere ein Anteil des Lichts, das aus einer vorbestimmten Einfallsrichtung, zum Beispiel in einem vorbestimmten Winkel, auf ein optisches Gitter fällt, abgelenkt werden. Licht, insbesondere ein Anteil des Lichts, das aus einer anderen Richtung auf das optische Gitter fällt, wird vorzugsweise nicht abgelenkt oder umso weniger, je größer der Unterschied zur vorbestimmten Einfallsrichtung ist. Der Lichtanteil, welcher von der vorbestimmten Einfallsrichtung oder Optimaleinfallsrichtung abweicht, kann folglich vorzugsweise ungehindert durch das Substrat mit dem optischen Gitter propagieren.

Zusätzlich oder alternativ kann ein optisches Gitter noch wellenlängenselektiv oder frequenzselektiv ausgebildet sein. Somit kann nur Licht, insbesondere ein erster Anteil des Lichts mit einer vorbestimmten Wellenlänge von dem optischen Gitter in einem bestimmten Beugungswinkel abgelenkt oder gebeugt werden. Licht, insbesondere ein zweiter Anteil des Lichts mit einer anderen als der vorbestimmten Wellenlänge wird vorzugsweise nicht abgelenkt, oder umso weniger je größer der Unterschied zur vorbestimmten Wellenlänge ist.

Der zweite Lichtanteil, welcher von der vorbestimmten Wellenlänge oder Optimalwellenlänge abweicht, kann folglich vorzugsweise ungehindert durch das Substrat mit dem optischen Gitter propagieren. Dadurch kann beispielsweise von polychromatischem Licht, welches auf das optische Gitter trifft, wenigstens ein monochromatischer Lichtanteil abgespaltet werden. In vorteilhafter Weise ist der Ablenkeffekt für die Optimalwellenlänge maximal und fällt zu längeren und kürzeren Wellenlängen hin, beispielsweise gemäß einer Gaußglocke, ab oder wird schwächer. Insbesondere wirkt der Ablenkeffekt nur auf einen Bruchteil des sichtbaren Lichtspektrums und/oder in einem Winkelbereich kleiner als 90 Grad.

Eine Herstellung eines optischen Gitters kann insbesondere mittels Belichtung eines Substrats, also beispielsweise fotolithografisch oder holografisch, erfolgen. In diesem Zusammenhang kann das optische Gitter dann auch als holografisches oder holografisch-optisches Gitter bezeichnet werden. Es sind zwei Arten von holografisch-optischen Gittern bekannt: holografische Oberflächengitter (surface holografic gratings, kurz: SHG) und holografische Volumengitter (volume holografic gratings, kurz: VHG). Bei einem holografischen Oberflächengitter kann die Gitterstruktur durch optisches Verformen einer Oberflächenstruktur des Substrats erzeugt werden. Durch die veränderte Oberflächenstruktur kann auftreffendes Licht abgelenkt, zum Beispiel reflektiert werden. Beispiele für holografische Oberflächengitter sind sogenannte Sägezahn- oder Blazegitter. Im Gegensatz dazu kann die Gitterstruktur bei holografischen Volumengittern in das ganze Volumen oder einen Teilbereich des Volumens des Substrats eingearbeitet sein. Holografische Oberflächengitter und holografische Volumengitter sind in der Regel frequenzselektiv. Es sind jedoch auch optische Gitter bekannt die polychromatisches Licht beugen können. Diese werden als holografische Mehrfachvolumengitter (multiplexed volume holografic gratings, kurz: MVHG) bezeichnet und können beispielsweise durch Verändern der Periodizität der Gitterstruktur eines optischen Gitters oder durch Anordnen mehrerer holografisches Volumengitter hintereinander hergestellt werden.

Als Material für das besagte Substrat zum Einarbeiten eines optischen Gitters eignet sich besonders ein Polymer, insbesondere ein Fotopolymer, oder eine Folie, insbesondere eine fotosensitive Folie, zum Beispiel aus Kunststoff oder organischen Stoffen. Substrate die eine Ablenkstruktur zum Beugen von Licht, beispielsweise in Form eines optischen Gitters aufweisen, können auch als holografisch-optische Elemente (HOE) bezeichnet werden.

Durch die beschriebene Ausbildung des Einkoppelbereichs und des Auskoppelbereichs wird daher das Beugen des auf den Einkoppelbereich fallenden Lichts zur beispielsweise seitlich an dem beispielsweise transparenten Trägermedium angeordneten Bilderfassungseinrichtung möglich, wodurch das Objekterkennungssystem derart gestaltet sein kann, dass die Bilderfassungseinrichtung in einer bevorzugten Einbaulage der Erfassungseinrichtung auf dem Gerät zumindest teilweise abgedeckt und somit unscheinbar angeordnet ist.

In einer bevorzugten Ausgestaltungsform der Erfindung ist es vorgesehen, dass das flächige Trägermedium zwischen dem Einkoppelbereich und dem Auskoppelbereich als transparente Platte, Folie oder Lack ausgebildet ist. Das flächige Trägermedium kann also mit einer kleinen Dicke ausgebildet sein, sodass die Breite und Länge des flächigen Trägermediums im Vergleich zu dieser kleinen Dicke des Trägermediums, die senkrecht zur flächigen Oberfläche des flächigen Trägermediums steht, groß ist. Das flächige Trägermedium kann beispielsweise zwischen einem halben Millimeter und fünf Millimeter dick sein. Falls das flächige Trägermedium als transparente Folie ausgebildet ist, ist es außerdem biegbar ausgebildet, das heißt es kann zerstörungsfrei verformt werden, wobei als zerstörungsfreies Verformen ein zerstörungsfreies Verbiegen der Folie um einen Biegeradius von kleiner als zwei Zentimetern verstanden wird. Falls das flächige Trägermedium als transparenter Lack ausgebildet ist, kann es eine Dicke im Mikrometerbereich und folglich kleiner als einen Millimeter aufweisen. Hierdurch wird erreicht, dass das flächige Trägermedium mit dem Einkoppelbereich und dem Auskoppelbereich an zahlreichen Positionen, beispielsweise innerhalb eines Kraftfahrzeugs oder an einer Wand, unauffällig angeordnet sein kann, ohne dort beispielsweise ein dahinter angeordnetes Objekt zu verdecken, sodass beispielsweise eine Anordnung auf einer Fensterscheibe des Kraftfahrzeugs denkbar ist. Hierdurch wird die Entfernungsmessvorrichtung in eine beliebige Umgebung integrierbar.

In einer besonders vorteilhaften Ausgestaltungsform der Erfindung ist es vorgesehen, dass die Auswerteeinrichtung dazu ausgelegt ist, als bereitgestellte Objektdaten eine räumliche Lage des erfassten Objekts relativ zu einem Bezugspunkt des Objekterkennungssystems und/oder eine dreidimensionale Form des erfassten Objekts zu bestimmen, insbesondere mittels Photogrammetrie. Sind beispielsweise an verschiedenen Positionen innerhalb eines Fahrzeuginnenraums jeweilige Erfassungseinrichtungen mit beispielsweise jeweiligen Bilderfassungseinrichtungen angeordnet, kann von verschiedenen Blickwinkeln aus beispielsweise der Fahrer des Kraftfahrzeugs erfasst werden. Mithilfe der von den beispielsweise mehreren Bilderfassungseinrichtungen bereitgestellten Bilddaten kann die Auswerteeinrichtung letztendlich bestimmen, wo sich der Fahrer relativ zu einem Bezugspunkt des Objekterkennungssystems, wie beispielsweise relativ zu der Oberfläche des Trägermediums einer der Erfassungseinrichtungen, befindet. Es können also beispielsweise Koordinaten des erfassten Objekts bestimmt werden. Alternativ oder zusätzlich dazu kann außerdem eine dreidimensionale Rekonstruktion der Oberfläche des Objekts, das heißt dessen Form, bestimmt werden. Diese von der Auswerteeinrichtung durchgeführte Auswertung erfolgt mittels Photogrammetrie, das heißt mithilfe einer Messmethode und eines dazugehörigen Auswerteverfahrens der Fernerkundung, das dazu ausgelegt ist, aus Abbildungen, das heißt aus Bilddaten, eines Objekts dessen räumliche Lage oder dreidimensionale Form zu bestimmen. Hierfür wird in der Regel das Objekt, das von natürlichem Licht umstrahlt wird, von mehreren Standpunkten aus aufgenommen, das heißt es sind an verschiedenen Positionen in der Umgebung des Objekts Erfassungseinrichtungen mit jeweiligen Bilderfassungseinrichtungen positioniert, die jeweils ein Abbild des Objekts aus ihrer jeweiligen Perspektive erstellen.

Die Auswerteeinrichtung ist dazu ausgelegt, aus den Bilddaten der Abbilder aus verschiedenen Perspektiven, nachdem die jeweiligen Objektdaten bestimmt wurden, Details über die Anordnung des erfassten Objekts in der Umgebung bereitzustellen. Dies ermöglicht außerdem, dass eine Bewegung eines Objekts durch einen Innenraum verfolgt werden kann, da für verschiedene Zeitpunkte die räumliche Lage des erfassten Objekts sowie dessen Orientierung, das heißt dessen Form, ermittelbar und mit entsprechenden Daten von anderen Zeitpunkten vergleichbar ist. Hierdurch können zum Beispiel Gesten eines Fahrers zuverlässig und schnell erfasst, erkannt und interpretiert werden.

In einer weiteren Ausgestaltungsform ist es vorgesehen, dass das Objekterkennungssystem eine Lichtquelle umfasst, die dazu ausgelegt ist, ein Lichtsignal in die Umgebung auszusenden. Das Lichtsignal kann insbesondere als Infrarotlicht, das heißt als Infrarotlichtsignal, und/oder als ein vorgegebenes Lichtmuster ausgesendet werden. Die Auswerteeinrichtung ist dazu ausgelegt, basierend auf dem erfassten und in der Umgebung reflektierten Lichtsignal eine Verbesserung der Bilddaten und/oder die Objekterkennung durchzuführen, wobei das von der Lichtquelle ausgesendete Lichtsignal durch einen am flächigen Trägermedium bereitgestellten Lichtsignaleinkoppelbereich in das flächige Trägermedium eingekoppelt, mittels interner Reflexion durch das flächige Trägermedium geleitet und an einem am flächigen Trägermedium bereitgestellten Lichtsignalauskoppelbereich in die Umgebung austritt. Der Lichtsignaleinkoppelbereich ist hierfür als holografisches Element mit einer dritten Ablenkstruktur ausgebildet, die dazu ausgelegt ist, das Lichtsignal, das auf die dritte Ablenkstruktur fällt, in das flächige Trägermedium einzukoppeln. Der Lichtsignalauskoppelbereich ist entsprechend ebenfalls als holografisches Element mit einer vierten Ablenkstruktur ausgebildet, die dazu ausgelegt ist, das übertragene Lichtsignal, das auf die vierte Ablenkstruktur fällt, aus dem flächigen Trägermedium in die Umgebung auszukoppeln.

Die Lichtquelle sendet nun also beispielsweise Infrarotlicht durch das HOE hindurch aus. Dieses Infrarotlicht kann zusätzlich dazu in Form eines vorgegebenen Lichtmusters, das heißt als sogenanntes Structured Light, emittiert werden. Alternativ zu Infrarotlicht kann Licht eines anderen Wellenlängenbereichs, wie zum Beispiel sichtbares Licht, als vorgegebenes Lichtmuster ausgesendet werden. Ein solches Lichtmuster wird häufig für eine Autofokusfunktion verwendet, das heißt für ein Scharfstellen des Abbilds des Objekts, wobei das Abbild in Form der Bilddaten bereitgestellt ist. Hierbei handelt es sich nämlich um eine gängige Methode zum automatischen Fokussieren, beispielsweise von einer Digitalkameraeinrichtung. Der Lichtsignaleinkoppelbereich kann hierbei dem Auskoppelbereich entsprechen und der Lichtsignalauskoppelbereich dem Einkoppelbereich. Allerdings ist dies nur dann der Fall, wenn die Lichtquelle entsprechend beispielsweise unterhalb oder seitlich des Trägermediums angeordnet ist, und zwar in der Nähe der Bilderfassungseinrichtung. Alternativ dazu kann die Lichtquelle von dem Gerät umfasst sein, auf dem die Erfassungseinrichtung angeordnet ist.

Mithilfe des Lichtsignals können also zum einen die Bilddaten verbessert werden. Denn mittels eines derartigen Lichtsignals kann zum Beispiel die beschriebene Autofokusfunktion für die Bilderfassungseinrichtung bereitgestellt werden. Allerdings kann zudem mithilfe des Lichtsignals eine bessere Erfassung des Objekts erreicht werden, da beispielsweise mehr Licht im sichtbaren Wellenlängenbereich zu Belichtung der Umgebung vorhanden ist, wenn das Lichtsignal entsprechend gewählt wird, was insbesondere in einer dunklen Umgebung sinnvoll ist und zur Verbesserung der Bildqualität beiträgt. Außerdem kann dadurch verhindert werden, dass bei starkem Streulicht eine Bildqualität reduziert wird, da durch das Erfassen des vorgegebenen reflektierten Lichtsignals entsprechende Korrekturberechnungen durch die Auswerteeinrichtung durchgeführt werden können. Das beschriebene Lichtsignal kann daher letztendlich zu einer Verbesserung der Objekterkennung beitragen, da die Objektdaten auf den Bilddaten basieren. Bei der Durchführung der Objekterkennung kann es zudem von der Auswerteeinrichtung beispielsweise berücksichtigt werden, wie das Objekt an seiner Oberfläche das Lichtsignal reflektiert, sodass beispielsweise Informationen über eine Materialbeschaffenheit des Objekts ermittelt werden können, wodurch die Objekterkennung verbessert werden kann.

In einer besonders vorteilhaften Ausgestaltungsform der Erfindung ist es vorgesehen, dass der Einkoppelbereich und der Auskoppelbereich einstückig mit dem Trägermedium ausgebildet sind oder das Trägermedium als separates Element zu dem Einkoppelbereich und dem Einkoppelbereich ausgebildet ist. Im ersten Fall können der Einkoppelbereich und der Auskoppelbereich somit beispielsweise direkt an einer Oberfläche des Trägermediums eingearbeitet sein. Das heißt die Ablenkstruktur kann beispielsweise in die Oberfläche des Trägermediums geätzt oder gelasert sein. Somit kann das Trägermedium selbst als HOE ausgebildet sein. Im zweiten Fall können Einkoppelbereich, Auskoppelbereich und Trägermedium separat ausgebildet sein. Dabei können der Einkoppelbereich und der Auskoppelbereich beispielsweise wenigstens ein erstes Element bilden, und das Trägermedium kann ein zweites Element bilden, das an dem ersten Element anliegt. Somit können der Einkoppelbereich und der Auskoppelbereich in wenigstens einem HOE ausgebildet sein. Beispielsweise können der Einkoppelbereich und der Auskoppelbereich in unterschiedlichen Abschnitten einer holografischen Folie oder Platte ausgebildet sein. Zum Befestigen der Folie oder Platte an dem Trägermedium kann die Folie der Platte an das Trägermedium angeklebt sein. Alternativ kann die holografische Folie auch als Adhäsionsfolie ausgebildet sein und direkt, also ohne Klebstoff, durch molekulare Kräfte an der Oberfläche des Trägermediums haften. Die Erfassungseinrichtung mit dem Trägermedium und dem daran angeordneten Einkoppelbereich und Auskoppelbereich kann somit auf verschiedene Arten und insbesondere kostengünstig hergestellt sein.

Erfindungsgemäß ist es vorgesehen, dass die zumindest eine Erfassungseinrichtung des Objekterkennungssystems im Fahrzeuginnenraum angeordnet und zu einem mit Licht durchstrahlten Volumen des Fahrzeuginnenraums und/oder zu einer Umgebung des Kraftfahrzeugs hin ausgerichtet ist. Die zumindest eine Erfassungseinrichtung ist also zum Beispiel derart im Kraftfahrzeuginnenraum angeordnet, dass Licht aus dem Fahrzeuginnenraum auf die erste Ablenkstruktur des Einkoppelbereichs fällt und in das Trägermedium eingekoppelt wird. Die im Zusammenhang mit dem erfindungsgemäßen Objekterkennungssystem vorgestellten bevorzugten Ausgestaltungsformen und deren Vorteile gelten entsprechend, soweit anwendbar, für das erfindungsgemäße Kraftfahrzeug. Aus diesem Grund sind die entsprechenden Ausgestaltungsformen des erfindungsgemäßen Kraftfahrzeugs hier nicht noch einmal beschrieben. Letztendlich ist die Erfassungseinrichtung bevorzugt derart im Fahrzeuginnenraum angeordnet, dass diese beispielsweise auf einem Gerät im Fahrzeuginnenraum angeordnet ist, wobei der Einkoppelbereich auf der Seite angeordnet ist, die gegenüber der Seite angeordnet ist, an der die Erfassungseinrichtung auf der Oberfläche des Geräts im Fahrzeuginnenraum befestigt ist.

Eine vorteilhafte Ausgestaltungsform des erfindungsgemäßen Kraftfahrzeugs sieht vor, dass das Trägermedium mit dem Einkoppelbereich und dem Auskoppelbereich der zumindest einen Erfassungseinrichtung jeweils an einer von folgenden Positionen angeordnet ist: In einem Bildschirm einer Anzeigevorrichtung im Fahrzeuginnenraum, in einem Rückspiegel, in einer Mittelkonsole, in einem Armaturenbrett, das heißt in einem sogenannten Dashbord, in einem Kombinationsinstrument, in einer Windschutzscheibe, in einem Seitenfenster, in einem Dachfenster und/oder zwischen A-Säulen des Kraftfahrzeugs. Die Erfassungseinrichtung kann hierbei in die jeweilige Komponente des Kraftfahrzeugs integriert sein oder auf beziehungsweise an dieser befestigt sein. Insbesondere immer dann, wenn das Trägermedium als flächige transparente Platte, Folie oder Lack ausgebildet ist, sind diverse Positionsmöglichkeiten innerhalb des Kraftfahrzeugs möglich, wie beispielsweise auf der Windschutzscheibe oder auf den Seitenfenstern. Durch die verschiedenen genannten Positionen sind letztendlich verschiedene Perspektiven auf das Objekt in der Umgebung im Fahrzeuginnenraum vorgesehen, aus denen jeweils Bilddaten des Objekts ermittelt werden, die daraufhin zur Bestimmung der Objektdaten berücksichtigt werden. Hierbei ist außerdem der Vorteil zu sehen, dass ein direkter Lichtgang des Lichts zum Einkoppelbereich möglich ist, wodurch Abschattungen oder Verzerrungen verringert werden können. Alternativ oder zusätzlich zu den genannten Positionen kann das Trägermedium an einer Applikation im Kraftfahrzeug, zum Beispiel an einer von hinten lackierten Leiste oder eine Blende, oder an einem Schutzglas angeordnet sein.

Erfindungsgemäß ist es vorgesehen, dass das Objekterkennungssystem zumindest zwei Erfassungseinrichtungen umfasst, die an jeweils unterschiedlichen Positionen im Kraftfahrzeuginnenraum angeordnet sind. Es sind also mindestens zwei Erfassungseinrichtungen vorgesehen, die an zwei der oben genannten Positionen positionierbar sind, wodurch die bereits beschriebenen Perspektiven erreichbar sind, woraufhin letztendlich das Objekt im Fahrzeuginnenraum erkannt und eine Objektinformation in Form der das erkannte Objekt beschreibenden Objektdaten, beispielsweise für eine weitere Auswerteeinrichtung, beispielsweise eines Fahrerassistenzsystem oder einer Gestensteuerung, bereitgestellt werden kann.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausgestaltungsformen.

Im Folgenden sind Ausführungsbeispiele der Erfindung beschrieben. Hierzu zeigt:
- Fig. 1: eine schematische Darstellung einer Erfassungseinrichtung eines Objekterkennungssystems; und
- Fig. 2: schematische Darstellungen eines Fahrzeuginnenraums eines Kraftfahrzeugs mit einem Objekterkennungssystem.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

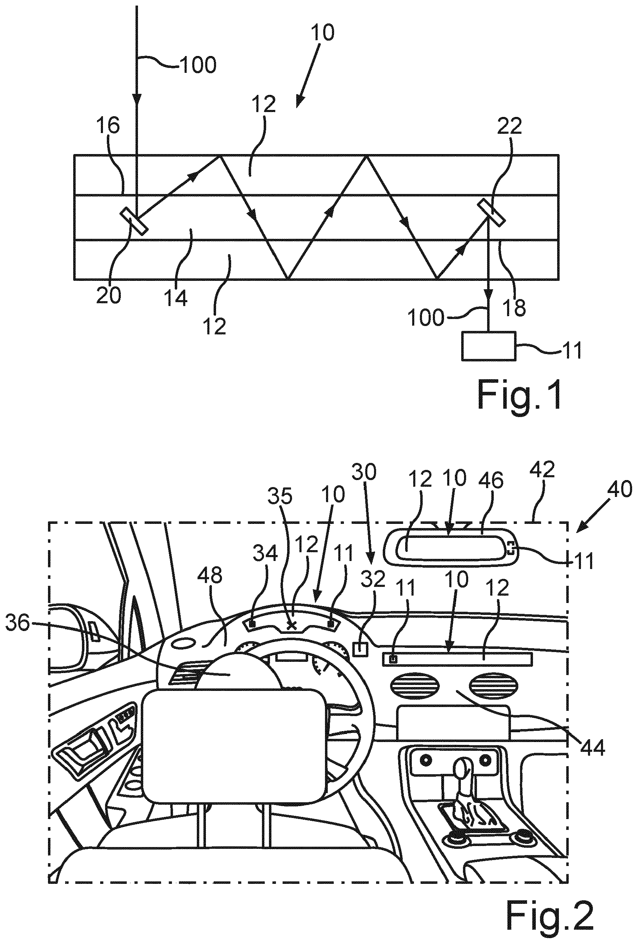

In Fig. 1 ist eine Erfassungseinrichtung 10 für ein Objekterkennungssystem 30 (dargestellt mit dem Bezugszeichen 30 in Fig. 2) skizziert. Die Erfassungseinrichtung 10 umfasst ein Trägermedium 12 sowie eine Bilderfassungseinrichtung 11. Das Trägermedium 12 ist als flächiges Trägermedium 12 ausgebildet, und zwar als transparente Platte, Folie oder Lack. Dieses flächige Trägermedium 12 ist dazu ausgelegt, auf einem Gerät, beispielsweise in einem Fahrzeuginnenraum 42 (dargestellt mit dem Bezugszeichen 42 in Fig. 2) angeordnet zu werden. Das Trägermedium 2 ist darüber hinaus als Lichtleiter ausgebildet, an dem ein Einkoppelbereich 16 und ein Auskoppelbereich 18 bereitgestellt sind.

Der Einkoppelbereich 16 ist als holographisches Element 14 mit einer ersten Ablenkstruktur 20 ausgebildet, die dazu ausgelegt ist, Licht 100, das aus einer Umgebung auf die erste Ablenkstruktur 20 fällt, in das Trägermedium 12 einzukoppeln. Das Trägermedium 12 ist dazu ausgebildet, das eingekoppelte Licht 100 mittels interner Reflexion von dem Einkoppelbereich 16 zum Auskoppelbereich 18 zu übertragen. Der Auskoppelbereich 18 ist ebenfalls als holographisches Element 14 und mit einer zweiten Ablenkstruktur 22 ausgebildet, die dazu ausgelegt ist, das übertragene Licht 100, das auf die zweite Ablenkstruktur 22 fällt, aus dem flächigen Trägermedium 12 auszukoppeln. Die Bilderfassungseinrichtung 11 ist dazu ausgebildet, das ausgekoppelte Licht 100 zu erfassen und in Form von Bilddaten, die mit dem erfassten Licht 100 korrelieren, bereitzustellen.

Der Einkoppelbereich 16 und der Auskoppelbereich 18 weisen als die jeweilige Ablenkstruktur 20, 22 zumindest ein optisches Gitter auf, das insbesondere als ein holographisches Volumengitter oder als ein holographisches Oberflächengitter ausgebildet ist. Der Einkoppelbereich 16 und der Auskoppelbereich 18 sind außerdem einstückig mit dem Trägermedium 12 ausgebildet. Alternativ dazu kann das Trägermedium 12 ist als separates Element zu dem Einkoppelbereich 16 und dem Auskoppelbereich 18 ausgebildet sein.

In Fig. 2 ist der Fahrzeuginnenraum 42 eines Kraftfahrzeugs 40 skizziert. In diesem befindet sich das Objekterkennungssystem 30, das in diesem Beispiel drei Erfassungseinrichtungen 10 umfasst. Diese Erfassungseinrichtungen 10 sind in einer Mittelkonsole 44, in einem Rückspiegel 46 sowie in einem Armaturenbrett 48 des Kraftfahrzeugs 40 angeordnet. Zusätzlich zu den jeweiligen Erfassungseinrichtungen 10 und der jeweils zumindest einen Bilderfassungseinrichtung 11 umfasst das Objekterkennungssystem 30 eine zentrale Auswerteeinrichtung 32. Die Auswerteeinrichtung 32 ist dazu ausgebildet, unter Berücksichtigung der Bilddaten, die von den jeweiligen Bilderfassungseinrichtungen 11 bereitgestellt werden, ein Objekt 36 in der Umgebung zu erfassen, das erfasste Objekt 36 unter Berücksichtigung eines Objekterkennungskriteriums zu erkennen und das erkannte Objekt 36 beschreibende Objektdaten bereitzustellen. Als bereitgestellte Objektdaten können beispielsweise eine räumliche Lage des erfassten Objekts 36 relativ zu einem Bezugspunkt des Objekterkennungssystems 30 und/oder eine dreidimensionale Form des erfassten Objekts 36 bestimmt werden. Dies kann insbesondere mittels Photogrammetrie erfolgen. Als Objekt 36 kann hier beispielsweise ein Fahrer des Kraftfahrzeugs 40 vom Objekterkennungssystem 30 erfasst werden. Das Objekt 36 ist daher als Fahrer in Fig. 2 skizziert.

Die jeweilige Bilderfassungseinrichtung 11 kann beispielsweise an einem seitlichen Bereich der jeweiligen Erfassungseinrichtung 10 angeordnet sein. Sie kann jedoch, wie dies am Beispiel der Erfassungseinrichtung 10 im Rückspiegel 46 skizziert ist, in einem seitlichen Rahmen des Geräts, auf dem das flächige Trägermedium 12 angeordnet ist, angeordnet sein, sodass sie für den Fahrer nicht sichtbar ist.

Das Objekterkennungssystem 30 umfasst zudem eine Lichtquelle 34, die dazu ausgelegt ist, ein Lichtsignal in die Umgebung auszusenden, das heißt in den Fahrzeuginnenraum 42. Das Lichtsignal kann zum Beispiel als Infrarotlicht, also als Infrarotlichtsignal, und/oder als ein vorgegebenes Lichtmuster ausgesendet werden. Die Auswerteeinrichtung 32 ist nun dazu ausgelegt, basierend auf dem erfassten, in der Umgebung reflektierten Lichtsignal eine Verbesserung der Bilddaten und/oder die Objekterkennung durchzuführen. Bevorzugt ist die Lichtquelle 34 derart relativ zur Erfassungseinrichtung 10 angeordnet, dass das von der Lichtquelle 34 ausgesendete Lichtsignal durch einen Lichtsignaleinkoppelbereich in das Trägermedium 12 eingekoppelt, mittels interner Reflexion durch das Trägermedium 12 geleitet und an einem Lichtsignalauskoppelbereich in die Umgebung austritt. Hierbei ist der Lichtsignaleinkoppelbereich beispielsweise gleich dem Auskoppelbereich 18 und der Lichtsignalauskoppelbereich gleich dem Einkoppelbereich 16. Der Lichtsignalauskoppelbereich ist in Fig. 1 exemplarisch mit einem Kreuz 35 markiert.

Alternative Positionen, an denen die zumindest eine Erfassungseinrichtung 10 im Fahrzeuginnenraum 42 angeordnet sein kann, sind: in einem Bildschirm einer Anzeigevorrichtung im Fahrzeuginnenraum 42, in einem Kombinationsinstrument, in einer Windschutzscheibe, in einem Seitenfenster, zwischen zwei A-Säulen des Kraftfahrzeugs 40.

Das Objekterkennungssystem 30 umfasst bevorzugt zumindest zwei Erfassungseinrichtungen 10, das heißt beispielsweise wie in dem beschriebenen Beispiel drei Erfassungseinrichtungen 10. Diese sind an jeweils unterschiedlichen Positionen im Fahrzeuginnenraum 42 angeordnet.

Insgesamt zeigen die Beispiele, wie durch die Erfindung eine Erkennung von Objekten 36 in einem Fahrzeuginnenraum 42 bereitgestellt werden kann. Hierfür wird ein holographisch-optisches Element (HOE) zur Erkennung der Objekte 36 im Fahrzeuginnenraum 42 genutzt. Das hierfür ausgelegte Objekterkennungssystem 30 kann unscheinbar in einer Applikationsleiste, das heißt beispielsweise in der Mittelkonsole 44, im Armaturenbrett 48 oder im Kombinationsinstrument, oder auf dem Bildschirm der Anzeigevorrichtung im Fahrzeuginnenraum 42, in der Windschutzscheibe, in einem Seitenfenster und/oder auf dem Rückspiegel 46 angeordnet sein. Das Objekterkennungssystem 30 dient der Erkennung von Objekten 36. Hierbei ist neben der Verbaubarkeit auch von Vorteil, dass ein Strahlengang, das heißt der Strahlengang des Lichts 100, parallel gehalten und somit Abschattungen oder Verzerrungen verhindert werden können. Des Weiteren kann das Lichtsignal von der Lichtquelle 34 in das Trägermedium 12 eingeleitet und aus diesem in Richtung der Umgebung ausgekoppelt werden, um eine dadurch erreichbare Verbesserung der Aufnahmequalität bei der Bilddatenbestimmung und/oder der Objekterkennung zu nutzen. Ein weiterer Vorteil ergibt sich aus der Nutzung diverser Beleuchtungsarten, um feststellen zu können, aus welchem Material ein Gegenstand gefertigt ist und/oder welche Temperatur beziehungsweise welche Oberflächeneigenschaften er hat. Hierfür eignet sich beispielsweise ein Lichtsignal aus Infrarotlicht.

Dies alles wird erreicht, indem ein holographisch-optisches Element in der Mittelkonsole, dem Armaturenbrett, dem Bildschirm der Anzeigevorrichtung, dem Kombinationsinstrument und/oder dem Rückspiegel 46 positioniert wird, um letztendlich die von dem Fahrer mitgebrachten Objekte 36 sowie den Fahrer selbst als Objekt 36 erfassen und auswerten zu können. Hierbei sind mehrere Ansichten aus unterschiedlichen Perspektiven von Vorteil, da diese zur Rekonstruktion, beispielsweise über Photogrammetrie, genutzt werden können. Es können also auch diverse Systeme miteinander kombiniert werden, um eine zeitgleiche Erfassung eines Objekts 36 im Fahrzeuginnenraum 42 zu ermöglichen oder etwa die Bewegung des Objekts 36 durch den Fahrzeuginnenraum 42 zu verfolgen. Zur Verbesserung der Erfassung können weitere Lichtquellen 34 oder Erfassungsmethoden, die beispielsweise mittels Lichtmuster oder Infrarotlicht erfolgen, genutzt werden. Diese ermöglichen auch dann eine Erfassung von qualitativ hochwertigen Bilddaten sowie Objektdaten, wenn der Fahrzeuginnenraum 42 dunkel ist oder starkes Streulicht im Fahrzeuginnenraum 42 beobachtet wird.

## Patentansprüche

1. Kraftfahrzeug (40) mit einem Fahrzeuginnenraum (42) und einem Objekterkennungssystem (30), wobei das Objekterkennungssystem (30) eine Auswerteeinrichtung (32) und zumindest zwei Erfassungseinrichtungen (10) mit jeweils zumindest einer Bilderfassungseinrichtung (11) sowie einem flächigen Trägermedium (12) zum Anordnen auf einem Gerät umfasst, wobei das Trägermedium (12) als Lichtleiter ausgebildet ist, an dem ein Einkoppelbereich (16) und ein Auskoppelbereich (18) bereitgestellt sind, wobei
- der Einkoppelbereich (16) als holografisches Element (14) mit einer ersten Ablenkstruktur (20) ausgebildet ist, die dazu ausgelegt ist, Licht (100), das aus einer Umgebung auf die erste Ablenkstruktur (20) fällt, in das flächige Trägermedium (12) einzukoppeln;
- das flächige Trägermedium (12) dazu ausgebildet ist, das eingekoppelte Licht (100) mittels interner Reflexion von dem Einkoppelbereich (16) an den Auskoppelbereich (18) zu übertragen;
- der Auskoppelbereich (18) als holografisches Element (14) mit einer zweiten Ablenkstruktur (22) ausgebildet ist, die dazu ausgelegt ist, das übertragene Licht (100), das auf die zweite Ablenkstruktur (22) fällt, aus dem flächigen Trägermedium (12) auszukoppeln;
- die zumindest eine Bilderfassungseinrichtung (11) dazu ausgebildet ist, das ausgekoppelte Licht (100) zu erfassen und in Form von Bilddaten, die mit dem erfassten Licht (100) korrelieren, bereitzustellen; und
- die Auswerteeinrichtung (32) dazu ausgebildet ist, unter Berücksichtigung der Bilddaten ein Objekt (36) in der Umgebung zu erfassen, das erfasste Objekt (36) unter Berücksichtigung eines Objekterkennungskriteriums zu erkennen und das erkannte Objekt (36) beschreibende Objektdaten bereitzustellen;
wobei die zumindest zwei Erfassungseinrichtungen (10) des Objekterkennungssystems (30) im Fahrzeuginnenraum (42) angeordnet und zu einem mit Licht (100) durchstrahlten Volumen des Fahrzeuginnenraums (42) und/oder zu einer Umgebung des Kraftfahrzeugs hin ausgerichtet sind, wobei die zumindest zwei Erfassungseinrichtungen (10) an jeweils unterschiedlichen Positionen im Fahrzeuginnenraum (42) derart angeordnet sind, dass das Objekt (36) von mehreren Standpunkten aus in jeweils verschiedenen Perspektiven aufgenommen wird, wobei die Auswerteeinrichtung dazu ausgelegt ist, aus den Bilddaten der Abbilder aus verschiedenen Perspektiven, nachdem die jeweiligen Objektdaten bestimmt wurden, Details über die Anordnung des erfassten Objekts in der Umgebung bereitzustellen.

2. Kraftfahrzeug (40) nach dem vorhergehenden Anspruch, wobei der Einkoppelbereich (16) und der Auskoppelbereich (18) als jeweilige Ablenkstruktur (20, 22) zumindest ein optisches Gitter, insbesondere ein holografisches Volumengitter oder ein holografisches Oberflächengitter, aufweisen.

3. Kraftfahrzeug (40) nach einem der vorhergehenden Ansprüche, wobei das flächige Trägermedium (12) mit dem Einkoppelbereich (16) und dem Auskoppelbereich (18) als transparente Platte, Folie oder Lack ausgebildet ist.

4. Kraftfahrzeug (40) nach einem der vorhergehenden Ansprüche, wobei die Auswerteeinrichtung (32) dazu ausgelegt ist, als bereitgestellte Objektdaten eine räumliche Lage des erfassten Objekts (36) relativ zu einem Bezugspunkt des Objekterkennungssystems (30) und/oder eine dreidimensionale Form des erfassten Objekts (36) zu bestimmen, insbesondere mittels Photogrammetrie.

5. Kraftfahrzeug (40) nach einem der vorhergehenden Ansprüche, wobei das Objekterkennungssystem (30) eine Lichtquelle (34) umfasst, die dazu ausgelegt ist, ein Lichtsignal, insbesondere Infrarotlicht und/oder ein vorgegebenes Lichtmuster, in die Umgebung auszusenden, und die Auswerteeinrichtung (32) dazu ausgelegt ist, basierend auf dem erfassten in der Umgebung reflektierten Lichtsignal mittels der Auswerteeinrichtung Korrekturberechnungen der Bilddaten und/oder der Objekterkennung durchzuführen, wobei das von der Lichtquelle ausgesendete Lichtsignal durch einen Lichtsignaleinkoppelbereich in das Trägermedium (12) eingekoppelt, mittels interner Reflexion durch das Trägermedium (12) geleitet und an einem Lichtsignalkoppelbereich in die Umgebung austritt.

6. Kraftfahrzeug (40) nach einem der vorhergehenden Ansprüche, wobei der Einkoppelbereich (16) und der Auskoppelbereich (18) einstückig mit dem Trägermedium (12) ausgebildet sind oder das Trägermedium (12) als separates Element zu dem Einkoppelbereich (16) und dem Auskoppelbereich (18) ausgebildet ist.

7. Kraftfahrzeug (40) nach einem der vorhergehenden Ansprüche, wobei das Trägermedium (12) mit dem Einkoppelbereich (16) und dem Auskoppelbereich (18) der zumindest zwei Erfassungseinrichtungen (10) jeweils an einer von folgenden Positionen angeordnet ist:
- in einem Bildschirm einer Anzeigevorrichtung im Fahrzeuginnenraum (42);
- in einem Rückspiegel (46);
- in einer Mittelkonsole (44);
- in einem Armaturenbrett (48);
- in einem Kombinationsinstrument;
- in einer Windschutzscheibe;
- in einem Seitenfenster;
- in einem Dachfenster;
- zwischen zwei A-Säulen des Kraftfahrzeugs (40).

## Claims

1. A motor vehicle (40) with a vehicle interior (42) and an object recognition system (30), wherein the object recognition system (30) includes an evaluation device (32) and at least two capturing devices (10) with each at least one image capturing device (11) as well as an extensive carrier medium (12) for arranging on an appliance, wherein the carrier medium (12) is formed as a light guide, at which a coupling-in area (16) and a coupling-out area (18) are provided, wherein
- the coupling-in area (16) is formed as a holographic element (14) with a first deflection structure (20), which is adapted to couple light (100), which is incident on the first deflection structure (20) from an environment, into the extensive carrier medium (12);
- the extensive carrier medium (12) is formed to transfer the coupled-in light (100) from the coupling-in area (16) to the coupling-out area (18) by means of internal reflection;
- the coupling-out area (18) is formed as a holographic element (14) with a second deflection structure (22), which is adapted to couple the transferred light (100), which is incident on the second deflection structure (22), out of the extensive carrier medium (12);
- the at least one image capturing device (11) is formed to capture the coupled-out light (100) and to provide it in the form of image data, which correlates with the captured light (100); and
- the evaluation device (32) is formed to recognize an object (36) in the environment considering the image data, to recognize the captured object (36) considering an object recognition criterion and to provide object data describing the recognized object (36);
wherein the at least two capturing devices (10) of the object recognition system (30) are arranged in the vehicle interior (42) and are oriented towards a volume of the vehicle interior (42) penetrated by light (100) and/or towards an environment of the motor vehicle, wherein the at least two capturing devices (10) are arranged in respectively different positions in the vehicle interior (42) such that the object (36) is captured from multiple viewpoints in respectively different perspectives, wherein the evaluation device is adapted to provide details about the arrangement of the captured object in the environment from the image data of the pictures from different perspectives after the respective object data has been determined.

2. The motor vehicle (40) according to the preceding claim, wherein the coupling-in area (16) and the coupling-out area (18) comprise at least one optical grating, in particular a holographic volume grating or a holographic surface grating, as the respective deflection structure (20, 22).

3. The motor vehicle (40) according to any one of the preceding claims, wherein the extensive carrier medium (12) with the coupling-in area (16) and the coupling-out area (18) is formed as a transparent plate, foil or varnish.

4. The motor vehicle (40) according to any one of the preceding claims, wherein the evaluation device (32) is adapted to determine a spatial position of the captured object (36) in relation to a reference point of the object recognition system (30) and/or a three-dimensional shape of the captured object (36) as the provided object data, in particular by means of photogrammetry.

5. The motor vehicle (40) according to any one of the preceding claims, wherein the object recognition system (30) includes a light source (34), which is adapted to emit a light signal, in particular infrared light and/or a preset light pattern, into the environment, and the evaluation device (32) is adapted to perform correction calculations of the image data and/or the object recognition based on the captured light signal reflected in the environment by means of the evaluation device, wherein the light signal emitted by the light source is coupled into the carrier medium (12) by a light signal coupling-in area, passed through the carrier medium (12) by means of internal reflection and exits into the environment at a light signal coupling area.

6. The motor vehicle (40) according to any one of the preceding claims, wherein the coupling-in area (16) and the coupling-out area (18) are formed integrally with the carrier medium (12) or the carrier medium (12) is formed as a separate element to the coupling-in area (16) and the coupling-out area (18).

7. The motor vehicle (40) according to any one of the preceding claims, wherein the carrier medium (12) with the coupling-in area (16) and the coupling-out area (18) of the at least two capturing devices (10) is respectively arranged in one of the following positions:
- in a screen of a display device in the vehicle interior (42);
- in a rearview mirror (46);
- in a center console (44);
- in a dashboard (48);
- in an instrument cluster;
- in a windscreen;
- in a side window;
- in a roof window;
- between two A-pillars of the motor vehicle (40).

## Revendications

1. Véhicule à moteur (40) comportant un habitacle de véhicule (42) et un système de reconnaissance d'objet (30), le système de reconnaissance d'objet (30) comprenant un dispositif d'évaluation (32) et au moins deux dispositifs de détection (10) ayant respectivement au moins un dispositif de capture d'image (11) ainsi qu'un support plat (12) pour un agencement sur un appareil, le support (12) étant réalisé sous la forme d'un conduit de lumière sur lequel sont disposées une zone de couplage (16) et une zone de découplage (18),
- la zone de couplage (16) étant réalisée sous la forme d'un élément holographique (14) ayant une première structure de déviation (20) configurée pour coupler dans le support plat (12) de la lumière (100) provenant d'une zone environnante qui est incidente sur la première structure de déviation (20) ;
- le support plat (12) étant configuré pour transmettre, par réflexion interne, la lumière couplée (100) de la zone de couplage (16) à la zone de découplage (18) ;
- la zone de découplage (18) étant réalisée sous la forme d'un élément holographique (14) ayant une seconde structure de déviation (22) configurée pour découpler du support plat (12) la lumière (100) transmise qui est incidente sur la seconde structure de déviation (22) ;
- le au moins un dispositif de capture d'image (11) étant configuré pour capturer la lumière découplée (100) et pour la fournir sous forme de données d'image corrélées avec la lumière (100) capturée ; et
- le dispositif d'évaluation (32) étant configuré pour capturer un objet (36) dans la zone environnante en tenant compte des données d'image, pour reconnaître l'objet (36) détecté en tenant compte d'un critère de reconnaissance d'objet et pour fournir des données d'objet décrivant l'objet (36) reconnu ;
les au moins deux dispositifs de détection (10) du système de reconnaissance d'objet (30) étant agencés dans l'habitacle de véhicule (42) et dirigés vers un volume de l'habitacle de véhicule (42) traversé par la lumière (100) et/ou vers une zone environnante du véhicule à moteur, les au moins deux dispositifs de détection (10) étant agencés dans des positions respectivement différentes dans l'habitacle de véhicule (42), de telle sorte que l'objet (36) est enregistré à partir de plusieurs positions selon des perspectives respectivement différentes, le dispositif d'évaluation étant conçu pour fournir des détails sur l'agencement de l'objet détecté dans la zone environnante à partir des données d'image des images prises à partir de différentes perspectives, après que les données d'objet respectives ont été déterminées.

2. Véhicule à moteur (40) selon la revendication précédente, dans lequel la zone de couplage (16) et la zone de découplage (18) comportent, en tant que structure de déviation respective (20, 22), au moins un réseau optique, en particulier un réseau holographique volumique ou un réseau holographique surfacique.

3. Véhicule à moteur (40) selon l'une des revendications précédentes, dans lequel le support plat (12) ayant la zone de couplage (16) et la zone de découplage (18) est réalisé sous forme de plaque, de film ou de vernis transparent.

4. Véhicule à moteur (40) selon l'une des revendications précédentes, dans lequel le dispositif d'évaluation (32) est conçu pour déterminer, en tant que données d'objet capturées, une position spatiale de l'objet (36) détecté par rapport à un point de référence du système de reconnaissance d'objet (30) et/ou une forme tridimensionnelle de l'objet (36) détecté, en particulier par photogrammétrie.

5. Véhicule à moteur (40) selon l'une des revendications précédentes, dans lequel le système de reconnaissance d'objet (30) comprend une source de lumière (34) conçue pour émettre dans la zone environnante un signal lumineux, en particulier de la lumière infrarouge et/ou un modèle lumineux prédéterminé, et le dispositif d'évaluation (32) est conçu pour, sur la base du signal lumineux réfléchi détecté dans la zone environnante, effectuer des calculs de correction des données d'image et/ou la reconnaissance d'objet au moyen du dispositif d'évaluation, le signal lumineux émis par la source de lumière étant couplé dans le support (12) à travers une zone de couplage de signal lumineux, guidé par réflexion interne à travers le support (12) et sortant dans la zone environnante au niveau d'une zone de couplage de signal lumineux.

6. Véhicule à moteur (40) selon l'une des revendications précédentes, dans lequel la zone de couplage (16) et la zone de découplage (18) sont réalisées d'un seul tenant avec le support (12), ou le support (12) est réalisé sous forme d'élément séparé de la zone de couplage (16) et de la zone de découplage (18).

7. Véhicule à moteur (40) selon l'une des revendications précédentes, dans lequel le support (12) avec la zone de couplage (16) et la zone de découplage (18) des au moins deux dispositifs de détection (10) est respectivement agencé dans l'une des positions suivantes :
- sur un écran d'un dispositif d'affichage situé dans l'habitacle de véhicule (42) ;
- dans un rétroviseur (46) ;
- dans une console centrale (44) ;
- dans un tableau de bord (48) ;
- dans un groupe d'instruments ;
- dans un pare-brise ;
- dans une vitre latérale ;
- dans une lunette de toit ;
- entre deux montants avant du véhicule à moteur (40).
